# EUROPEAN PATENT SPECIFICATION

(11) **EP 2 150 161 B1**
(45) Date of publication and mention of the grant of the patent: **15.06.2011**
(21) Application number: 08718998.1
(22) Date of filing: 09.04.2008
(51) Int. Cl.: A47K 3/28, G01F 15/00

(54) **SHOWER METER ARRANGEMENT**
ZÄHLERANORDNUNG FÜR EINE DUSCHE
SYSTÈME DE COMPTEUR POUR DOUCHE

(30) Priority: 25.04.2007 GB 0707993
(43) Date of publication of application: 10.02.2010
(73) Proprietor: MacDonald, Hamish, London NW2 4BG (GB)
(72) Inventor: MacDonald, Hamish, London NW2 4BG (GB)
(74) Representative: Parnham, Kevin
(86) International application number: PCT/GB2008/001212
(87) International publication number: WO 2008/132430

(56) References cited:
- DE-A1- 19 516 991
- US-A1- 2003 233 885

## Description

The present invention relates to shower meter arrangements and more particularly to shower meter arrangements in order to provide an indication as to the volume of water used.

Use of precious water resources, particularly in highly populated urban areas, as well as areas of drought or water shortage is both an environmental and cost consideration. It is accepted that personal washing utilising a shower rather than a bath is more efficient in terms of water usage. However, such considerations are only applicable if the user only uses a standard volume of water rather than stands or runs a shower for protracted periods of time.

DE-A- 195 16 991 describes a shower meter arrangement using an acoustic sensor for indicating the usage time of the shower.

US2003/0233885 A1 describes a fluid metering and control device which uses a fin in a space defined by the interior of the water pipe. Water engages the fin, causing the fin to rotate.

Unfortunately, utilisation of positive displacement or other meter devices is not acceptable in terms of cost and installation requirements. Furthermore, it will be appreciated that simple basic timer devices are not appropriate in that each individual will have their own desired flow rate and other conditions for showering, such as spray configuration, pulsing and other actions with respect to the shower fluid flow.

In accordance with aspects of the present invention there is provided a meter arrangement for a shower according to claim 1.

Further aspects of the present invention are set out in the accompanying claims, to which reference should now be made.

Aspects of the present invention will now be described by way of example and with reference to the accompanying drawings in which:
Fig 1 is a plan view of a shower meter in accordance with aspects of the present invention;
Fig 2 is a front elevation of the shower meter depicted in Fig 1;
Fig 3 is a rear elevation of a shower meter depicted in Fig 1 and Fig 2;
Fig 4 is a schematic illustration of display configurations;
Fig 5 is a schematic illustration of a meter in accordance with aspects of the present invention associated with a shower;
Fig 6 is a schematic illustration of initial calibration of a meter arrangement in accordance with aspects of the present invention;
Figure 7 provides a schematic illustration of a set up procedure with regard to a shower meter arrangement in accordance with aspects of the present invention; and,
Figure 8 provides a schematic illustration of stages with regard to operation of a shower meter arrangement in accordance with further aspects of the present invention.

As indicated above provision of an indicator as to the volume of water dispensed whilst showering will be beneficial in terms of monitoring and maintaining the general benefits of the use of showers rather than baths. In such circumstances aspects of the present invention provide typically a wall mounted device which measures the time taken for different volumes of water to be expelled from the shower head. The shower meter may be utilised as an educational tool or for ongoing use. With regard to an educational tool, it will be appreciated that for a user's desired flow rate, an indication of the typical time for that flow rate to dispense a desired pre-determined volume of water can be demonstrated. With regard to ongoing usage, it will be understood that generally a user will set the shower to their own preferred flow rate and, therefore, that flow rate will be generally consistent and so the meter arrangement can be utilised as a broad indicator in terms of a psychologically linked timing device giving an indication through a display as to the proportion of the desired pre-determined volume dispensed so far. By these approaches in addition to controlling the amount of water wasted, it will also be understood that necessary energy to heat that wasted water will be avoided.

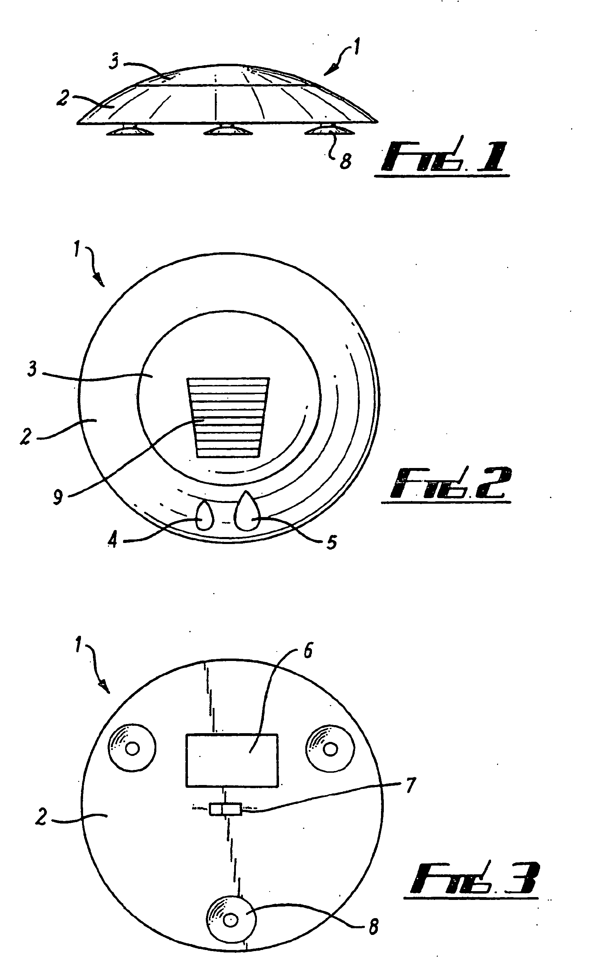

Meter arrangements in accordance with aspects of the present invention will generally be formed from a plastic housing, which in the illustrations provided with regard to Figs 1 to 3, is of a round format but it will also be understood that alternatively more aesthetically appealing shapes such as droplet shapes or otherwise, may be utilised. Clearly with regard to showers it is important that the housing provides a waterproof accommodation for the electronic devices utilised to provide indications in accordance with aspects of the present invention. The display will generally be an LCD display with an incremental feature to show a proportion of the desired pre-determined volume dispenser so far either by sequential illumination of bars within the display or de-illimination dependent upon requirements.

Typically, when not in use the meter arrangement, in accordance with aspects of the present invention, will utilise the in-built timer as a digital clock. In such circumstances the time will be displayed upon the display in are appropriate format.

As will be described later, it is necessary to use a standard measure, which may take the form of a measuring cylinder, for utilisation in association with the meter arrangement. It is advantageous in accordance with aspects of the present invention if the packaging in which the metering arrangement is distributed or stored can also act as a measuring device with regard to initial calibration and set up. It will be understood that precise, highly accurate determination of a standard volume is not absolutely important with regard to aspects of the present invention. The purpose of the meter arrangement and the method of metering is to provide an indication or an educational tool with regard to a user understanding roughly how long they can spend in the shower to meet supposed average pre-determined volumes for showering.

Figs 1 to 3 provide a schematic illustration of a shower meter 1 in accordance with aspects of the present invention. The shower meter comprises a housing 2 which presents a display module 3 on an outward facing surface. The housing 2 generally incorporates switches 4, 5 to be utilised with respect to operation of the shower meter 1. Typically, upon a rear surface of the housing 2, an aperture 6 is provided to receive electrical batteries. The aperture 6 is sealed to prevent water ingress. It will also be noted that a set up switch 7 is provided to switch the shower meter 1 between a set up or calibration mode and a locked mode with regard to operation.

In use, the meter 1 will be secured to a wall surface through suckers 8, although as an alternative the arrangement could hang on a hook or have a clamp to embrace an upstanding pipe or other element. It will be appreciated that the shower meter 1 will generally not be too intrusive and therefore will typically have a diameter of about 15cm and a depth of about 3cm.

As can be seen a display 9 in the embodiment depicted has a distinctive bar configuration. Such a bar configuration allows individual bars to be illuminated or de-illuminated dependent upon requirements with respect to indicating the proportion of the pre-determined volume dispensed so far. Alternatively, a simple on/off display having illumination may be utilised. As indicated above, the objective is either to provide an educational tool with reward to providing a user with an indication of the desired volume to be used in a single showering operation. In such circumstances by providing an incremental display 9, a degree of psychological referencing may be provided aiding recall of a desired shower time period at the user's desired shower flow rate within which the pre-determined volume will be dispensed. To further aid this mental imagery, the bars 9 may be illuminated in different colours or arranged to flash or provide other referencing as audio signals to be utilised by a user. Additionally, the display, in accordance with aspects of the present invention, may also be associated with an audio signal. This audio signal may be a succession of time spaced beeps again giving a user an audible reference to the desired shower time period for the pre-determined volume at the user's desired shower flow rate. By a combination of these factors a user will generally have an indication as to the time period they have for showering to remain within the pre-determined volume at their desired shower flow rate.

With regard to use of the shower meter 1 in normal use, it will be understood that the switches 4, 5 may simply be utilised to initiate a shower operation and then the shower meter 1 can pass through the time period with successive illumination of the display 9, until the display is fully illuminated indicating that the pre-determined volume has been dispensed. Clearly, if a user terminates showering before the display 9 is fully illuminated then they have remained within the pre-determined volume. If desired, the meter arrangement may adjust the predetermined volume for the user's lower requirements or "reward" the user with a longer shower with the un-used volumes from earlier showers. By appropriate collation either at a charging station or otherwise a user's activity may be monitored if they repeatedly exceed their allowable shower periods.

Set up and calibration is important with regard to aspects of the present invention. In such circumstances, as indicated above, generally a switch 7 is utilised to switch between set up and a locked ongoing condition for the meter 1. When in a set up condition the meter 1 can be calibrated to a particular user desired shower flow rate. Such set up or calibration is achieved as follows.

Initially, the switch 7 is set to the set up condition. If this is not performed then the meter 1 will generally be set to a factory default condition in terms of expected typical flow rate for showers and so time periods for full illumination of a display 9 set through simple pressing of the switches 4, 5 either individually or in combinations, that is to say press one switch in the knowledge that the arrangement on a standard shower flow rate will then provide an indication through the display for one pre-determined volume, whilst pressing the other switch again with pre-determined standard shower flow rates for illumination of the display 9 after an alternative pre-determined volume or the switches 4, 5 could act to relate to different standard shower rates or pressing the switches sequentially or in combination at the same time at a different pre-determined volume for display or shower flow rate. Furthermore, if the supply to the shower has a regulator to always give a fixed flow rate then the meter 1 may be set to that flow rate when applicable.

Once the set up switch 7 has been set a shower is switched on to the required temperature and a user's desired shower flow rate. Whilst the shower is dispensing at this rate, a standard measure typically in the form of a measuring cylinder is placed under the shower head until it is filled. Generally one of the switches 4, 5 is pressed simultaneously with initiation of filling of the standard measure. Once the standard measure is filled, the other switch 4, 5 is pressed so that the controller, through an appropriate timer, can determine a standard time period for dispense of the standard measure at the user's desired shower flow rate.

Assuming that a user is happy with regard to the procedure, the switch 7 will be thrown to the lock condition to enable to a controller to calculate the shower time at the desired shower rate in order to dispense a pre-determined volume. This procedure involves a controller utilising stored pre-determined volumes typical for acceptable showering. These volumes may be certifiable for cubic metres of water such that for example if the volume of a standard measure is X litres and the time taken to fill the standard volume at the shower rate is T seconds then the shower time period at the desired volume is given by the desired volume divided by X multiplied by T.

It will be appreciated that the particular pre-determined volumes will generally be specified. Guidance may be given by water or other authorities to give an indication as to typically an ample amount of water required for a single showering procedure. However, it may also be possible to adjust or select from a stored number of available pre-determined volumes dependent upon a user's requirements.

In terms of set up, it will be appreciated that the meter 1 can be reset by simply switching the toggle switch 7 back to the set up state and repeating the procedure with regard to the standard measure and the determination of the standard time period. Thus, if the meter 1 is used by the same user in different showering conditions, then the meter 1 can be adjusted as required. As an alternative, switches 4, 5 or other switches (not shown) may be utilised to access different shower time periods for different users dependent upon those users' desired flow rates. It will be understood that aspects of the present invention, are based upon users having access to their own desired shower flow rate and so adjusting the necessary taps or otherwise to achieve that flow rate as well as shower temperature. Furthermore, the amount of water specified for a shower may vary dependent upon temperature. The water stream at a shower head will be a combination of cold and hot water. It will be understood hot water will require energy to heat so reducing the amount of water used in a shower will save energy.

In terms of use with regard to the meter 1, it will be appreciated that initially a user selects one of the switches, 4, 5 in order to activate the meter 1. Generally, only one switch 4, 5 will be utilised during actual showering. In such circumstances one button 4, 5 may designate one pre-determined volume whilst the other designates an alternative pre-determined volume. Alternatively, each button may be operated by different users, dependent upon their requirements.

Upon activation, the display 9 will be illuminated. Generally, the switch 4, 5 will be switched at the same time as the shower is switched on.

When the display 9 is activated generally a graphic image as illustrated, including bars, will be shown as an indicator as to the proportion of the predetermined volume dispensed.

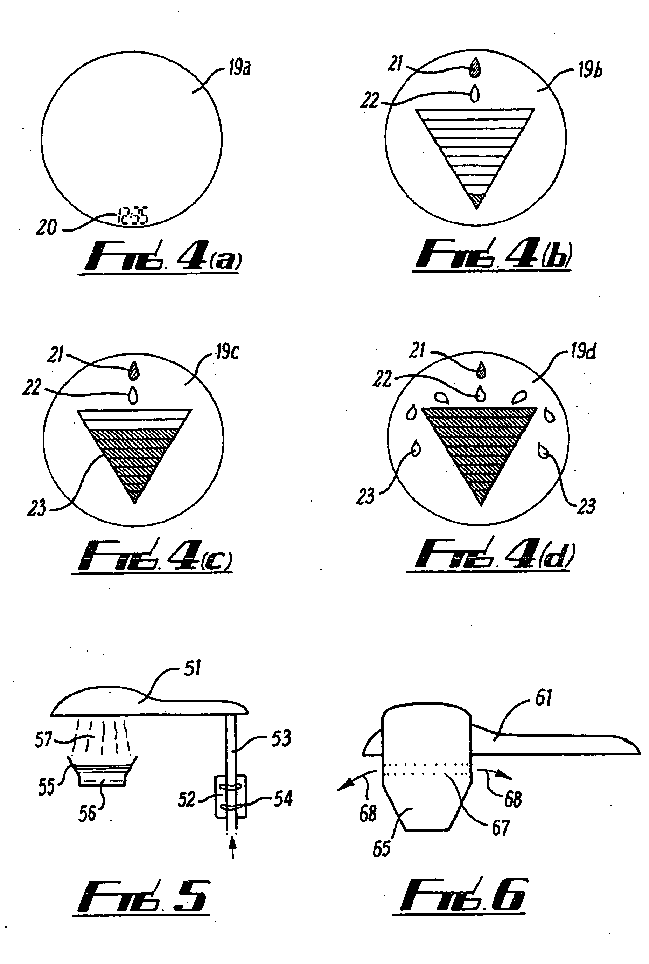

Fig 4 provides a schematic illustration of a display 19 at various stages. Thus, with regard to Fig 4a the associated shower meter with a display 19a is non-operational and therefore the display 19 simply displays the time 20. Fig 4b illustrates an initial condition in which the meter has been activated and the display initially shows flow by illuminating elements of the display. Thus, for one of the pre-determined volumes a single droplet 21 may be illuminated. For the alternative pre-determined volume, both the droplet 21 and a further droplet 22 may be illuminated whereas a third alternative with regard to predetermined volumes the droplet 22 may be illuminated and the droplet 21 not illuminated. In any event, the condition shown in the display 19b, shows initial operation of the meter in accordance with aspects of the present invention. Fig 4c illustrates a later stage of dispense whereby the display 19c has illuminated further segments of a bar display 23, again showing the proportion of the pre-determined volume dispensed so far. Fig 4d illustrates a display 19d where the display is full and shows further droplets 23, which appear to have cascaded over the graphic illumination. In such circumstances the display 19d will indicate that the meter has identified that the pre-determined volume will have been dispensed by the shower. Generally, an audible beep or other alarm will be sounded, which will continue for 10 seconds providing an indication to a user that the shower should be switched off if they wish to remain within the pre-determined volume range.

In terms of reactivation again a switch 4, 5 will be pressed and the procedure through the stage depicted in Fig 4 will again be performed. As indicated generally the meter through the display 19 will have a default display as depicted in Fig 4a showing a digital clock.

In terms of usage, as described above, generally the meter arrangement in accordance with aspects of the present invention will be readily transportable. In such circumstances, during initial set up, the meter can be hand held for synchronisation between filling the measuring cup as a standard measure with determination of the standard time period utilised for determination of the shower time period and the user's desired flow rate for the pre-determined volume. Fig 5 illustrates a typical shower head 51 with a meter 52 in accordance with aspects of the present invention secured to an up pipe 53 through a clamp 54. For calibration purposes a standard measure in the form of a cup 55 will be located below the shower head 51 and filled with water 56 in the form of a spray 57 from the head 51. In such circumstances, as described previously, buttons or switches on the meter 52 will be operated in order to determine the standard time period which is then utilised by a controller within the meter 52 to determine the shower time period for the desired fluid flow at the user's desired shower flow rate.

It will be appreciated that locating a cup as a standard measure 55 below the shower head 51 may cause difficulties in terms of capture of all the spray 57. In such circumstances, as illustrated in figure 6 an alternative may be to provide a standard measure 65 which can be wrapped around the spray rose of a shower head 61, or provided as a holster, such that there is close association between the measure 65 and the rose of the shower head 61. In such circumstances the standard measure 65 will fill with water until apertures 67 release water in the direction of arrowheads 68. Thus, with regard to a meter 62 a first button 63 will initiate determination of the standard period and a second button 64 will determine when the standard measure 65 has been filled and so the standard time period utilised by a controller in accordance with aspects of the present invention in order to determine the shower time period for a pre-determined volume.

Generally, as indicated above, calibration will occur initially through manual operation of switches and once as an indicator or educational act to provide a user with a feeling for the time period they can have as a shower at their desired shower flow rate. An alternative may be to provide rather than manual actuation of switches automatic switching. In such circumstances a meter, in accordance with aspects of the present invention, may have a built in standard measure, which can be associated with the shower head or comprise a holster for the meter. The standard measure may determine achievement of the standard measure volume through weight or level indicators, which can then be utilised as the determination for an off switch to set the standard time period utilised by a controller in order to determine the shower time period for a particular user at their desired flow rate. In such circumstances, on initial set up the user will switch on the shower until the desired flow rate and temperature is achieved. A button on the meter will be operated and the automatic process for determination of the standard time period for the standard measure of volume determined whereupon the controller will then use that standard time period to determine the shower time period that a user will have at that flow rate. As indicated above, such a process will not provide an accurate result, but will provide a broad indication and educational value with regard to user requirements.

Aspects of the present invention may also be utilised in communal or hostel type showering arrangements. The meter may thus be set to the user's normal desired shower flow rate and the user purchase a pre-determined volume of shower water rather than a number of showers or shower time. The meter acting as a lock to allow operation of the shower so that if there is no potential volume left upon the meter the shower will not operate or if the pre-determined volume is exceeded an alarm or audible indicator is given to an operator of the shower block. Thus, there is an incentive for users to reduce their consumption in a communal or hostel type showering arrangement. The meter will typically have a minimum calibration effecting user derived flow rate to avoid spurious results. Furthermore, users may be placed in shower time bands rather than particular shower time periods for determining usage. If the available pre-determined volume purchased or available on the meter arrangement is exhausted then the arrangement may be configured to close a valve. For example, a magnetic flow plunger interrupter may be placed in a feed pipe, if there is pre-determined volume still available then the plunger is lifted to allow flow whilst if the pre-determined volume is exhausted then the plunger is not lifted and flow stops. Such an arrangement will have particular advantage when there is a fixed, regulated supply rate.

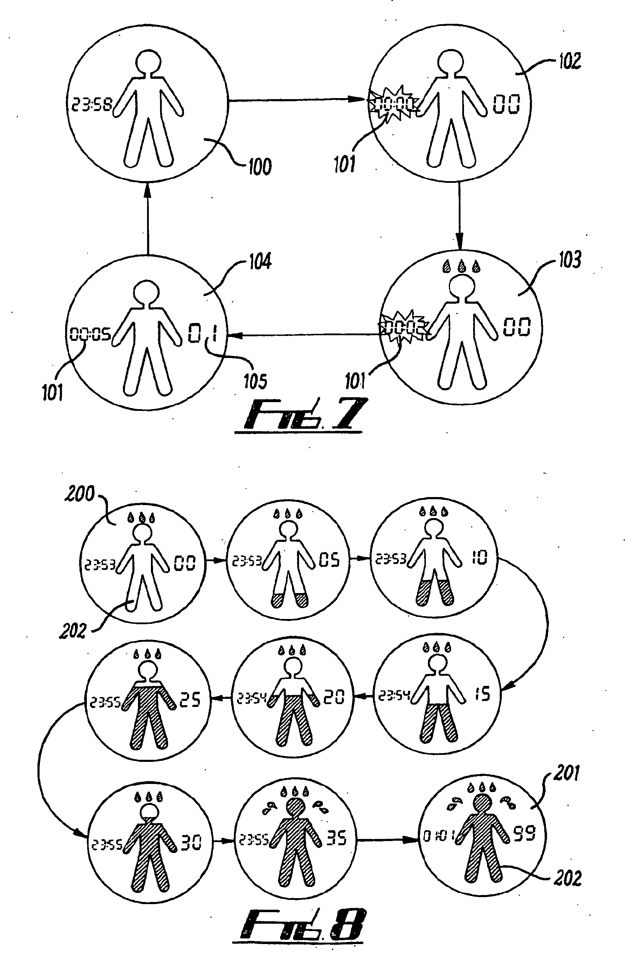

As indicated above generally, a meter arrangement in accordance with aspects of the present invention will include a timer. Thus, the meter arrangement will display a clock when not in use. Figure 7 provides an illustration as to the stages with respect to initial set up with one embodiment of aspects of the present invention. Thus, at stage 1 illustrated by reference 100 a button or combination of buttons will be pressed in association with the arrangement in order to access a fixed volume. Once that fixed volume set up is accessed a clock display 101 at stage 2 depicted by reference 102 will act. Once the display 101 blinks a further button will be pressed in order to start the shower timer. At the same time shower water will be dispensed and the display 101 increments at a third stage illustrated by reference 103. During this stage a container such as a fixed one litre container will be filled with water. Once the container has been filled at a fourth stage referenced by 104 a termination button will be pressed and the timer will then stop. The meter arrangement and the timer will then have a calibration value for the fixed volume. This may be displayed at the display 101 and an indication given as to the number of fixed volumes given at a further display 105. Once the set up procedure has been performed a further button will be pressed in order to return the meter to its standby state generally referenced as stage 1 and reference number 100 above.

Once calibration has been completed it will be appreciated that operation of the shower can then be conducted in accordance with the procedure as described above.

Figure 8 provides a further illustration as to a schematic with regard to ongoing operation of a meter in accordance with aspects of the present invention. As can be seen from an initial set up stage 200 to a final stage 201 a graphic 202 progressively fills showing the volume of a portion of the desired shower volume utilised so far.

Modifications and alternations to aspects of the present invention as defined by the claims will be appreciated by persons skilled in the art. In such circumstances the meter arrangement, in addition to providing metering, may also incorporate a radio and continuously display a time in addition to a graphic display in accordance with aspects of the present invention.

## Claims

1. A meter arrangement (1) for a shower comprising a timer, a controller with a display (9) and a standard measure (55, 65), the arrangement being **characterised by** having a set-up condition and a lock condition, the arrangement further comprising a switch arrangement (7) which is user operable to switch the arrangement into the set-up condition; the timer being operable, when the arrangement is in the set-up condition, to begin timing in response to a first manual activation of a switch (4, 5) and to stop timing in response to a second manual activation of a switch thereby to determine a standard time to fill the standard measure at a user's desired shower flow rate, and the controller being operable in the lock condition to use the determined standard time to calculate a shower time period over which a pre-determined volume is dispensed at the user's desired flow rate, the predetermined volume being set as an amount of water required for a single showering procedure, and the timer being operable in the lock condition and in response to a further manual activation of a switch arrangement to time the elapsing of the calculated shower time period and the controller being arranged to provide a signal to the display at the end thereof, indicative that the pre-determined volume has been dispensed based upon the time elapsed and the calculated shower time period.

2. An arrangement (1) as claimed in claim 1, **characterised in that** the shower time period is determined by multiplying the standard time by the number of standard measures equivalent to the pre-determined volume.

3. An arrangement (1) as claimed in claim 1 or claim 2, **characterised in that** the display (9) is configured to provide an indication of what proportion of the pre-determined volume has been dispensed so far since initiation.

4. An arrangement (1) as claimed in any of claims 1, 2 or 3, **characterised in that** the display (9) is simply a record of usage for display or recovery to provide an indication to a user.

5. An arrangement (1) as claimed in any preceding claim, **characterised in that** the display (9) is incremental and graduated proportionately to indicate the pre-determined volume.

6. An arrangement (1) as claimed in any preceding claim, **characterised in that** the display (9) comprises illuminated bars (23), respectively illuminated or de-illuminated to provide an indication of the predetermined volume dispensed.

7. An arrangement (1) as claimed in any preceding claim, **characterised in that** the display (9) is audible.

8. An arrangement as claimed in any preceding claim wherein the standard measure comprises a cup of a fixed volume.

9. An arrangement (1) as claimed in any of claims 1 to 8, **characterised in that** the arrangement includes a weight or level sensor (67) associated with the standard measure and the arrangement initially is arranged to fill the standard measure to determine a calibration time period until the measure is full by weight or level in order to establish the calibration time period as the standard time period.

10. An arrangement (1) as claimed in any preceding claim, **characterised in that** the pre-determined volume is 35 to 45 litres.

11. An arrangement (1) as claimed in any preceding claim, **characterised in that** once the shower time period is determined, the arrangement can be locked.

12. An arrangement (1) as claimed in any preceding claim, **characterised in that** the arrangement is associated with a flow valve.

## Patentansprüche

1. zähleranordnung (1) für eine Dusche, mit einem zeitgeber, einer Steuerungsvorrichtung mit einer Anzeige (9) und einem Standardmass (55, 65), wobei die Anordnung **dadurch gekennzeichnet ist, dass** sie einen Einrichtungszustand und einen verriegelten Zustand hat, wobei die Anordnung ausserdem eine Schaltanordnung (7) aufweist, die durch den Benutzer betätigbar ist, um die Anordnung in den Einrichtungszustand umzuschalten; wobei, wenn die Anordnung in dem Einrichtungszustand ist, der Zeitgeber betätigbar ist, um die Zeitvorgabe als Reaktion auf eine erste manuelle Aktivierung eines Schalters (4, 5) zu beginnen und die Zeitvorgabe als Reaktion auf eine zweite manuelle Aktivierung eines Schalters zu beenden, um **dadurch** eine Standardzeit zum Füllen des Standardmasses bei dem von einem Benutzer gewünschten Duschdurchsatz festzulegen; und wobei die Steuerungsvorrichtung in dem verriegelten Zustand betätigbar ist, um die festgelegte Standardzeit zum Berechnen einer Duschzeitdauer zu verwenden, während der ein vorbestimmtes Volumen bei dem vom Benutzer gewünschten Duschdurchsatz abgegeben wird, wobei das vorbestimmte Volumen als eine Wassermenge eingestellt wird, die für einen einzigen Duschvorgang erforderlich ist; und wobei der Zeitgeber in dem verriegelten Zustand und als Reaktion auf eine weitere manuelle Aktivierung einer Schaltanordnung betätigbar ist, das Verstreichen der berechneten Duschzeitdauer zeitlich festzulegen, und wobei die Steuerungsvorrichtung dazu eingerichtet ist, um der Anzeige an deren Ende ein Signal zuzuführen, welches anzeigt, dass das vorbestimmte Volumen basierend auf der verstrichenen Zeit und der berechneten Duschzeitdauer abgegeben worden ist.

2. Anordnung (1) nach Anspruch 1, **dadurch gekennzeichnet, dass** die Duschzeitdauer durch Multiplizieren der Standardzeit mit der Anzahl der zu dem vorbestimmten Volumen äquivalenten Standardmasse bestimmt wird.

3. Anordnung (1) nach Anspruch 1 oder 2, **dadurch gekennzeichnet, dass** die Anzeige (9) dazu ausgelegt ist, um anzugeben, welcher Anteil des vorbestimmten Volumens seit dem Auslösen bisher abgegeben worden ist.

4. Anordnung (1) nach einem der Ansprüche 1, 2 oder 3, **dadurch gekennzeichnet, dass** die Anzeige (9) einfach eine Nutzungs-Aufzeichnung zur Anzeige oder Einholung ist, um einem Benutzer eine Angabe bereitzustellen.

5. Anordnung (1) nach einem der vorhergehenden Ansprüche, **dadurch gekennzeichnet, dass** die Anzeige (9) inkrementell und proportional abgestuft ist, um das vorbestimmte Volumen anzugeben.

6. Anordnung (1) nach einem der vorhergehenden Ansprüche, **dadurch gekennzeichnet, dass** die Anzeige (9) Leuchtbalken (23) aufweist, die jeweils beleuchtet oder nicht-beleuchtet sind, um eine Angabe über das abgegebene vorbestimmte Volumen bereitzustellen.

7. Anordnung (1) nach einem der vorhergehenden Ansprüche, **dadurch gekennzeichnet, dass** die Anzeige (9) hörbar ist.

8. Anordnung (1) nach einem der vorhergehenden Ansprüche, **dadurch gekennzeichnet, dass** das Standardmass einen Becher mit festgelegtem Volumen aufweist.

9. Anordnung (1) nach einem der Ansprüche 1 bis 8, **dadurch gekennzeichnet, dass** die Anordnung einen dem Standardmass zugeordneten Gewichts- oder Pegelsensor (67) enthält, und dass
die Anordnung anfänglich zum Füllen des Standardmasses angeordnet ist, um eine bis zum Erreichen des nach Gewicht oder Pegel vollen Masses erforderliche Kalibrationszeitdauer zu bestimmen, damit die Kalibrationszeitdauer als Standardzeitdauer begründet wird.

10. Anordnung (1) nach einem der vorhergehenden Ansprüche, **dadurch gekennzeichnet, dass** das vorbestimmte Volumen 35 bis 45 Liter beträgt.

11. Anordnung (1) nach einem der vorhergehenden Ansprüche, **dadurch gekennzeichnet, dass**, wenn die Duschzeitdauer einmal Festgelegt worden ist, die Anordnung oder das Verfahren verriegelt werden kann.

12. Anordnung (1) nach einem der vorhergehenden Ansprüche, **dadurch gekennzeichnet, dass** die Anordnung einem Strömungsventil zugeordnet ist.

## Revendications

1. Système de compteur (1) pour une douche comprenant une minuterie, un contrôleur avec un écran (9) et une mesure standard (55, 65), le système étant **caractérisé en ce qu'**il comprend une condition d'installation et une condition de verrouillage, le système comprenant en outre un système de commutateur (7) qui peut être utilisé par l'utilisateur pour commuter le système dans la condition d'installation; la minuterie pouvant fonctionner, lorsque le système est dans la condition d'installation, pour commencer le décompte de temps en réponse à une première activation manuelle d'un commutateur (4, 5) et pour arrêter le décompte de temps en réponse à une deuxième activation manuelle d'un commutateur pour déterminer ainsi un temps standard afin de remplir une mesure standard au débit de douche souhaité de l'utilisateur, et le contrôleur pouvant fonctionner dans la condition de verrouillage pour utiliser le temps standard déterminé afin de calculer une période de temps de douche pendant laquelle un volume prédéterminé est utilisé au débit souhaité de l'utilisateur, le volume prédéterminé étant déterminé comme une quantité d'eau requise pour une seule procédure de douche, et la minuterie pouvant fonctionner dans la condition de verrouillage et en réponse à une autre activation manuelle d'un système de commutateur pour chronométrer l'écoulement de la période du temps de douche calculée et le contrôleur étant agencé pour fournir un signal à l'écran lors de son achèvement, indiquant que le volume prédéterminé a été utilisé en fonction du temps écoulé et de la période de temps de douche calculée.

2. Système (1) selon la revendication 1, **caractérisé en ce que** la période de temps de douche est déterminée en multipliant le temps standard par le nombre de mesures standard équivalentes au volume prédéterminé.

3. Système (1) selon la revendication 1 ou la revendication 2, **caractérisé en ce que** l'écran (9) est configuré pour fournir une indication de quelle proportion du volume prédéterminé a été utilisée jusqu'à présent depuis l'initiation.

4. Système (1) selon l'une quelconque des revendications 1, 2 ou 3, **caractérisé en ce que** l'écran (9) est simplement un enregistrement d'usage pour l'affichage ou la récupération afin de fournir une indication à un utilisateur.

5. Système (1) selon l'une quelconque des revendications précédentes, **caractérisé en ce que** l'écran (9) est incrémentiel et gradué proportionnellement pour indiquer le volume prédéterminé.

6. Système (1) selon l'une quelconque des revendications précédentes, **caractérisé en ce que** l'écran (9) comprend des barres éclairées (23), respectivement allumées ou éteintes pour fournir une indication du volume prédéterminé utilisé.

7. Système (1) selon l'une quelconque des revendications précédentes, **caractérisé en ce que** l'écran (9) est audible.

8. Système selon l'une quelconque des revendications précédentes, dans lequel la mesure standard comprend une coupelle d'un volume fixe.

9. Système (1) selon l'une quelconque des revendications 1 à 8, **caractérisé en ce que** le système comprend un capteur de poids ou de niveau (67) associé avec la mesure standard et le système est initialement agencé pour remplir la mesure standard afin de déterminer une période de temps de calibrage jusqu'à ce que la mesure soit pleine du point du vue du poids ou du niveau afin d'établir la période de temps de calibrage en tant que période de temps standard.

10. Système (1) selon l'une quelconque des revendications précédentes, **caractérisé en ce que** le volume prédéterminé est de 35 à 45 litres.

11. Système (1) selon l'une quelconque des revendications précédentes, **caractérisé en ce qu'**une fois que la période de temps de douche est déterminée, le système peut être verrouillé.

12. Système (1) selon l'une quelconque des revendications précédentes, **caractérisé en ce que** le système est associé à une soupape de débit.
